# EUROPÄISCHE PATENTSCHRIFT

(11) **EP 3 342 488 B1**
(45) Veröffentlichungstag und Bekanntmachung des Hinweises auf die Patenterteilung: **10.06.2020**
(21) Anmeldenummer: 18157420.3
(22) Anmeldetag: 19.12.2013
(51) Int. Cl.: B05D 5/08, B05D 7/14, B05D 1/00, C09K 3/18, E01H 4/02, B05D 3/14, B05D 1/28, C08F 14/18, C09D 5/00

(54) **VERWENDUNG EINES HYDROPHOBIERTEN KRAFTFAHRZEUGBAUTEILS FÜR PISTENPFLEGEFAHRZEUGE UND PISTENPFLEGEFAHRZEUGE MIT EINEM HYDROPHOBIERTEN KRAFTFAHRZEUGBAUTEIL**
USE OF A HYDROPHOBIC COMPONENT OF A MOTOR VEHICLE FOR TRACK MAINTENANCE VEHICLES AND TRACK MAINTENANCE VEHICLES COMPRISING THE HYDROPHOBIC COMPONENT
UTILISATION D'UN COMPOSANT DE VÉHICULE AUTOMOBILE HYDROPHOBE POUR VÉHICULES D'ENTRETIEN DE PISTES ET VÉHICULES D'ENTRETIEN DE PISTES COMPORTANT LE COMPOSANT DE VÉHICULE AUTOMOBILE HYDROPHOBE

(30) Priorität: 10.01.2013 DE 102013200272
(43) Veröffentlichungstag der Anmeldung: 04.07.2018
(62) Teilanmeldung aus: 13198491.6
(73) Patentinhaber: Kässbohrer Geländefahrzeug AG, 88471 Laupheim (DE)
(72) Erfinder: Nusser, Martin, 89231 Neu-Ulm (DE)
(74) Vertreter: Patentanwälte Ruff, Wilhelm, Beier, Dauster & Partner mbB

(56) Entgegenhaltungen:
- EP-A1- 0 352 180
- DE-A1- 3 919 620
- DE-A1- 10 332 744

## Beschreibung

### Anwendungsgebiet und Stand der Technik

Die Erfindung betrifft die Verwendung eines hydrophobierten Kraftfahrzeugbauteils sowie ein Pistenpflegefahrzeug, welches wenigstens ein hydrophobiertes Kraftfahrzeugbauteil umfasst.

In der DE 39 19 620 A1 ist ein Verfahren zur hydrophoben Beschichtung eines Tintenstrahlaufzeichnungskopfes offenbart, bei welchem ein Körper aus Silikonkautschuk gegen die zu beschichtende Oberfläche gedrückt wird. Zur Verbesserung der hydrophoben Wirkung kann der Silikonkautschukkörper einen fluorhaltigen Silikonkautschuk aufweisen oder mit einem fluorhaltigen Silikonöl getränkt sein.

Die DE 103 32 744 A1 offenbart ein Verfahren zur Beschichtung einer metallischen Oberfläche mit einer wässrigen Zusammensetzung, wobei die Zusammensetzung neben Wasser unter anderem ein fluorhaltiges Silan enthält.

In der EP 0 825 241 B1 wird eine wasserabweisende, insbesondere schnee- und eisabweisende, Zusammensetzung zur Beschichtung u.a. von Fahrzeugen wie beispielsweise Elektroautos, Zügen und Automobilen vorgeschlagen.

Die EP 0 352 180 A1 offenbart eine Verglasung mit Vereisungsschutz für Straßenfahrzeuge, wobei der Vereisungsschutz auf eine hydrophobe Schicht aus chlorhaltigen Organosilanen zurückgeht.

Die aus der EP 0 825 241 B1 bekannte Beschichtungszusammensetzung enthält mehrere Bestandteile und ist daher vergleichsweise aufwendig in der Herstellung sowie der Handhabung. Obendrein ist eine Erprobung der Zusammensetzung im Zusammenhang von Fahrzeugen, die extremen Witterungsbedingungen ausgesetzt sind, nicht beschrieben.

Demgegenüber besteht jedoch gerade bei Kraftfahrzeugen, welche extremen Kälte- und Schneeeinflüssen ausgesetzt sind, ein erhöhtes Bedürfnis nach Beschichtungen mit Antieis- und Antischneeeigenschaften.

### Aufgabe und Lösung

Der vorliegenden Erfindung lag daher die Aufgabe zugrunde, technische Lösungen bereitzustellen, welche dieses Bedürfnis adressieren.

Diese Aufgabe wird gemäß einem ersten Aspekt der Erfindung gelöst durch eine Verwendung mit den Merkmalen des unabhängigen Anspruchs 1. Bevorzugte Ausführungsformen der Verwendung sind in den abhängigen Ansprüchen 2 bis 4 definiert. Weiterhin wird die der Erfindung zugrunde liegende Aufgabe gelöst durch ein Pistenpflegefahrzeug mit den Merkmalen des Anspruchs 5. Der Wortlaut sämtlicher Ansprüche wird hiermit durch ausdrückliche Bezugnahme zum Inhalt der vorliegenden Beschreibung gemacht.

Die Oberflächenenergie ist ein Maß für die an einer Oberfläche wirksamen molekularen Kräfte. Je höher die Oberflächenenergie eines Materials, desto stärker ist die Wechselwirkung mit der Umgebung. Materialien mit hoher Oberflächenenergie werden stark von Wasser benetzt, das Wasser verläuft, es herrscht eine starke Anziehungskraft zwischen Oberfläche und Wasser. Materialien mit niedriger Oberflächenenergie werden dagegen nur schlecht von Wasser benetzt, das Wasser bildet hier aufgrund der geringen Anziehungskräfte zur Oberfläche einzelne Tropfen. Die Oberflächenenergie kann in einen polaren und in einen dispersen Anteil aufgeteilt werden. Der polare Anteil beinhaltet sämtliche Wechselwirkungen, welche aufgrund von unsymmetrischen Ladungsverteilungen innerhalb der oberflächennahen Moleküle zustande kommen (polare Gruppen wie beispielsweise sauerstoffhaltige Verbindungen), wohingegen der disperse Anteil die restlichen Wechselwirkungen beinhaltet.

Unter dem Ausdruck "hydrophobiertes Kraftfahrzeugbauteil" soll im Sinne der vorliegenden Erfindung ein behandeltes Kraftfahrzeugbauteil verstanden werden, dessen Oberflächenenergie als Folge der Behandlung erniedrigt ist.

Im Rahmen des ersten Aspektes schlägt die vorliegende Erfindung ein hydrophobiertes Kraftfahrzeugbauteil für ein Pistenpflegefahrzeug, vorzugsweise eine Pistenraupe, vor.

Das Kraftfahrzeugbauteil umfasst einen Kraftfahrzeugbauteilkörper und wenigstens eine hydrophobe Silanschicht, welche die Oberfläche des Kraftfahrzeugbauteilkörpers beschichtet.

Die wenigstens eine hydrophobe Silanschicht kann die Oberfläche des Kraftfahrzeugbauteilkörpers teilweise oder vollständig, d.h. vollflächig bzw. durchgehend, beschichten.

Bevorzugt ist die wenigstens eine Silanschicht adsorptiv über physikalische Wechselwirkungen an die Oberfläche des Kraftfahrzeugbauteilkörpers gebunden (Physisorption).

Unter dem Ausdruck "hydrophobe Silanschicht" soll im Rahmen der vorliegenden Erfindung eine Silanschicht verstanden werden, die die Oberflächenenergie des Kraftfahrzeugbauteilkörpers erniedrigt, so dass eine Anhaftung von Wasser, insbesondere in Form von Schnee und/oder Eis, auf der Oberfläche des Kraftfahrzeugbauteilkörpers erschwert oder gar unmöglich ist.

Der Ausdruck "wenigstens eine hydrophobe Silanschicht" bedeutet im Sinne der vorliegenden Erfindung eine hydrophobe Silanschicht oder eine Vielzahl von hydrophoben Silanschichten, d.h. zwei oder mehr hydrophobe Silanschichten.

Die wenigstens eine hydrophobe Silanschicht enthält ein hydrophobes Silan (oder gegebenenfalls eine Mischung hydrophober Silane) oder besteht aus einem solchen Silan (oder gegebenenfalls einer solchen Silanmischung).
Bei dem Silan selbst handelt es sich um ein funktionalisiertes Silan. Insoweit kommen grundsätzlich alle Silane in Betracht, welche aufgrund Ihrer Funktionalisierung hydrophob bzw. in der Lage sind, die Oberflächenenergie des Kraftfahrzeugbauteilkörpers zu erniedrigen.

sind, die Oberflächenenergie des Kraftfahrzeugbauteilkörpers zu erniedrigen.

Bei dem Silan handelt es sich um ein fluorhaltiges, insbesondere partiell fluoriertes oder perfluoriertes, Silan.

Besonders bevorzugt ist das Silan ausgewählt aus der Gruppe umfassend Fluoralkylsilane, Fluoralkylalkoxysilane und Mischungen davon.

Beispielsweise kann das Silan ausgewählt sein aus der Gruppe umfassend Tridecafluor-1,1,2,2-tetrahydrooctyltrichlorsilan, Tridecafluor-1,1,2,2-tetrahydrooctyltrimethoxysilan, Tridecafluor-1,1,2,2-tetrahydro-octyltriethoxysilan, Heptadecafluor-1,1,2,2-tetrahydrodecyltrichlorsilan, Heptadecafluor-1,1,2,2-tetrahydrodecyltriethoxysilan, Heptadecafluor-1,1,2,2-tetrahydrodecyltrimethoxysilan, C₁₀F₂₁C₂H₄SiCl₃, C₁₀F₂₁C₂H₄Si(OCH₃)₃, C₁₀F₂₁C₂H₄Si(OC₂H₅)₃, C₁₂F₂₅C₂H₄SiCl₃, C₁₂F₂₅C₂H₄Si(OCH₃)₃, C₁₂F₂₅C₂H₄Si(OC₂H₅)₃ und Mischungen davon.

In einer weiteren Ausführungsform handelt es sich bei dem Silan um ein Silanöl.

Die wenigstens eine hydrophobe Silanschicht kann in einer weiteren Ausführungsform, insbesondere wenn das Silan als Silanöl vorliegt, neben dem Silan weitere Bestandteile wie beispielsweise organische Lösungsmittel, insbesondere ausgewählt aus der Gruppe umfassend Methanol, Ethanol, Propanol, Isopropanol, Aceton, 3-Pentanon, Ethylacetat und Mischungen davon, enthalten.

Besonders bevorzugt handelt es sich bei dem Silan um das unter der Bezeichnung Dynasilan Sivo Clear EC kommerziell erhältliche Silan der Firma Evonik.

Die wenigstens eine hydrophobe Silanschicht ist vorzugsweise in Form eines Filmes auf der Oberfläche des Kraftfahrzeugbauteilkörpers ausgebildet.

Die wenigstens eine hydrophobe Silanschicht beschichtet in einer weiteren Ausführungsform eine aufgeraute und/oder Mikroporen aufweisende Oberfläche des Kraftfahrzeugbauteilkörpers. Eine derartige Oberfläche lässt sich zum Beispiel mittels einer aktivierenden Vorbehandlung des Kraftfahrzeugbauteilkörpers realisieren, beispielsweise mittels Aufflammen, Korona-Behandlung oder eines Niederdruck-Plasmaverfahrens. Durch eine aktivierende Vorbehandlung lässt sich mit besonderem Vorteil die Oberflächenenergie des Kraftfahrzeugbauteilkörpers erhöhen, wodurch die wenigstens eine hydrophobe Silanschicht stärker an die Oberfläche des Kraftfahrzeugbauteilkörpers binden kann.

Zur Herstellung des Kraftfahrzeugbauteilkörpers kommen grundsätzlich die zur Fertigung von Kraftfahrzeugbauteilen üblicherweise verwendeten Materialien in Betracht. Bevorzugt ist der Kraftfahrzeugbauteilkörper jedoch aus einem Material hergestellt bzw. gebildet, welches ausgewählt ist aus der Gruppe umfassend Polyester (PES), insbesondere Polyethylenterephthalat (PET), Polyvinylchlorid (PVC), insbesondere Weich-PVC, Polycarbonate (PC), Polyurethane (PUR), Polymethylmethacrylat, Polypropylen, glasfaserverstärkte Kunststoffe, Polyesterharze, Epoxydharze, Metalle, mittels kathodischer Tauchlackierung beschichtete Bleche (KT-Bleche), epoxydharzbeschichtete Metalle bzw. Bleche und Kombinationen davon.

Bei dem Kraftfahrzeugbauteilkörper handelt es sich vorzugsweise um ein Karosserieteil, insbesondere Verkleidungsteil, eines Pistenpflegefahrzeuges, vorzugsweise einer Pistenraupe.

Insbesondere kann es sich bei dem Kraftfahrzeugbauteilkörper um ein Karosserie- bzw. Verkleidungsteil einer Personenkabine eines Pistenpflegefahrzeuges, vorzugsweise einer Pistenraupe, handeln.

Besonders bevorzugt ist das oben genannte Karosserie- bzw. Verkleidungsteil ausgewählt aus der Gruppe umfassend Frontmaske (Bauteil unterhalb der Windschutzscheibe eines Pistenpflegefahrzeuges), Schneefräsenabdeckung, Überwurfschutz, Finisher und Fensterscheibe.

In einem zweiten Aspekt betrifft die Erfindung ein Pistenpflegefahrzeug, vorzugsweise eine Pistenraupe, umfassend wenigstens ein hydrophobiertes Kraftfahrzeugbauteil gemäß der vorliegenden Erfindung.

Zur Entfernung von Eis- und Schneeresten von einem erfindungsgemäßen Pistenpflegefahrzeug und insbesondere von dessen Anbauaggregaten wie einer Schneefräse kann es von Vorteil sein, wenn das Fahrzeug einen hierfür vorgesehenen Mechanismus aufweist, welcher unter Nutzung von Aktoren des Fahrzeugs eine Rüttelfunktion bereitstellt. Ein solcher Mechanismus nutzt entweder bereits bestehende Aktoren, wie beispielsweise jene Aktoren, die zum Anheben und Senken der Schneefräse vorgesehen sind, oder ist durch zusätzliche Aktoren realisiert, die einzig der Rüttelfunktion dienen. Die genannten Aktoren können insbesondere über das Hydrauliksystem des Fahrzeugs mit einem festgelegten Programm gesteuert werden, durch welches die Rüttelbewegung erzeugt wird. Das genannte Programm muss dabei nicht vom Fahrzeugführer durch beispielsweise wechselnde Betätigungen manuell realisiert werden, sondern ist durch einen Steuerrechner des Fahrzeugs realisiert. Es reicht, wenn der Fahrzeugführer dieses Programm beispielsweise durch eine hierfür vorgesehene Taste aufruft. Das Programm bewirkt an einem oder mehreren hierfür vorgesehenen Aktoren eine Bewegung mit wechselnden Richtungen, durch die beispielsweise ein Anbauaggregat, insbesondere die Schneefräse, im Wechsel in entgegengesetzte Richtungen bewegt wird. Hierbei können sowohl vergleichsweise hochfrequente Bewegungen bewirkt werden (> 2 Hz) als auch bevorzugterweise niederfrequente Bewegungen (< 2 Hz). Insbesondere durch ein ruckhaftes Abbremsen des jeweiligen Aktors und damit des jeweiligen Anbauaggregats bei der Richtungsumkehr kann Schnee und Eis insbesondere von erfindungsgemäß präparierten Oberflächen des Pistenpflegefahrzeugs zuverlässig entfernt werden.

Bezüglich weiterer Merkmale und Vorteile des Pistenpflegefahrzeuges, insbesondere des hydrophobierten Kraftfahrzeugbauteils, wird vollständig auf die bisherige Beschreibung Bezug genommen.

Schließlich betrifft die vorliegende Erfindung in einem dritten Aspekt die Verwendung eines hydrophoben Silans zur Herstellung eines hydrophobierten Kraftfahrzeugbauteils für ein Pistenpflegefahrzeug.

Zur Vermeidung von Wiederholungen wird bezüglich weiterer Merkmale und Vorteile, insbesondere des Silans, vollständig auf die im Rahmen des ersten und zweiten Erfindungsaspektes gemachten Ausführungen Bezug genommen.

Weitere Merkmale und Vorteile der Erfindung ergeben sich aus der nachfolgenden Beschreibung von bevorzugten Ausführungsformen in Form von Ausführungsbeispielen. Dabei können einzelne Merkmale jeweils für sich alleine oder in Kombination miteinander verwirklicht sein. Die beschriebenen Ausführungsformen dienen dabei lediglich der weiteren Erläuterung der Erfindung, ohne diese herauf zu beschränken.

### Beispielteil

### 1. Probe-Muster

Die folgenden Muster-Bauteilkörper eines Pistenpflegefahrzeuges (Pistenraupe) wurden verwendet:
1.1 rote, aus Polyester (PES) bestehende Fräsenabdeckungen (nachfolgend als Abdeckung-PES bezeichnet),
1.2 transparenter, aus Weich-Polyvinylchlorid (Weich-PVC) bestehender Überwurfschutz (nachfolgend als Weich-PVC bezeichnet),
1.3 mittels kathodischer Tauchlackierung mit Epoxydharz beschichtete Bleche (nachfolgend als Blech-KTL bezeichnet) und
1.4 transparent und aus Polycarbonat (PC) bestehende Fräsenabdeckungen (nachfolgend als Abdeckung-PC bezeichnet).

Die obigen Muster wurden hinsichtlich ihrer Oberflächenenergie sowie der chemischen Natur der Oberflächen charakterisiert. Eine infrarotspektroskopische Untersuchung bestätigte dabei bei sämtlichen Mustern die im Datenblatt angegebenen Materialinformationen. Es wurden insbesondere keine Hinweise auf hydrophobierende Oberflächenbehandlungen gefunden. Die Oberflächenenergien der Proben-Muster im Anlieferungszustand sind in unten stehender Tabelle 1 wiedergegeben.

**Tabelle 1: Oberflächenenergien der Probe-Muster**

| | **Oberflächenenergie unbehandelt [mN/m]** | | |
|---|---|---|---|
| **Muster** | **polar** | **dispers** | **gesamt** |
| Abdeckung-PES | 5,2 | 30,9 | 36,1 |
| Weich-PVC | 0,5 | 38,2 | 38,8 |
| Blech-KTL | 5,3 | 25,0 | 30,3 |
| Abdeckung-PC | 0,7 | 39,7 | 40,4 |

### 2. Oberflächenaktivierung (nicht erfindungsgemäß)

Zur Durchführung der chemischen Gasphasenabscheidung wurden die unter 1. genannten Proben-Muster einer Oberflächenaktivierung (Erhöhung der Oberflächenenergie) mittels eines Niederdruck-Plasmas vorgenommen. Bei verringertem Druck wurde bei Atmosphärenluft ein Plasma angelegt. Im Plasma erzeugte Elektronen und Ionen führten zum Aufbrechen von Bindungen in oberflächennahen Schichten der Probe-Muster. Die energiereichen Bindungen reagierten wiederum mit Molekülen aus der Umgebungsluft, was zu einer Vielzahl von sauerstoffhaltigen Gruppen an der Oberfläche führte. Die hierbei entstandenen stark polaren Gruppen erhöhten die Oberflächenenergie der Probe-Muster um ein Vielfaches.

Die durch die Niederdruck-Plasmaaktivierung erhaltenen Oberflächenenergien bei einer Behandlungsdauer von 180 Sekunden sind in untenstehender Tabelle 2 aufgeführt. Vor der Plasmaaktivierung wurden sämtliche Probe-Muster mit Isopropanol gereinigt.

**Tabelle 2: Oberflächenenergien der Probe-Muster nach Durchführung einer Niederdruck-Plasmaaktivierung**

| | **Oberflächenenergien [mN/m]** | | |
|---|---|---|---|
| **Muster** | **polar** | **dispers** | **gesamt** |
| Abdeckung-PES | 30,8 | 36,0 | 66,7 |
| Weich-PVC | 18,0 | 37,8 | 55,8 |
| Blech-KTL | 29,3 | 35,5 | 64,8 |
| Abdeckung-PC | 31,4 | 34,3 | 65,7 |

Sämtliche Oberflächenaktivierungen wurden auf einer Niederdruck-Plasma-Anlage des Typs "FEMTO" (Fa. DIENER) bei einem Prozessdruck von < 0.5 mbar mit Atmosphärenluft als Reaktionsgas durchgeführt. Die Leistungsdaten des Plasmagenerators betrugen 40 kHz, 100 W; Aktivierungsleistung 100 %.

### 3. chemisches Gasphasenabscheidungsverfahren (nicht erfindungsgemäß)

### 3.1 Erste Variante:

Zur Durchführung einer plasmaunterstützten chemischen Gasabscheidung wurde eine Niederdruck-Plasma-Anlage des Typs "TETRA 100" (40 kHz Plasmagenerator) verwendet (Niederdruck-Plasma-Verfahren bzw. ND-Plasma-Verfahren). Als Prozessgas wurde ein Fluormonomer eingesetzt. Die Behandlung wurde während eines Zeitraumes von 120 Minuten bei einem Druck von 0.09 mbar vorgenommen.

Dabei konnte die Oberflächenenergie bei sämtlichen Probe-Mustern um ein Vielfaches reduziert werden. Die entsprechenden Ergebnisse sind in untenstehender Tabelle 3 wiedergegeben. Durch die Beschichtung mittels chemischer Gasphasenabscheidung kam es im Übrigen bei keinem der Probe-Muster zu einer Veränderung der optischen Eigenschaften.

**Tabelle 3: Oberflächenenergien der Probe-Muster nach Durchführung eines Niederdruck-Plasma-Verfahrens**

| | **Oberflächenenergien [mN/m]** | | |
|---|---|---|---|
| **Muster** | **polar** | **dispers** | **gesamt** |
| Abdeckung-PES | 0,4 | 12,0 | 12,4 |
| Weich-PVC | 0,0 | 5,7 | 5,7 |
| Blech-KTL | 0,0 | 4,1 | 4,1 |
| Abdeckung-PC | 1,6 | 11,2 | 12,8 |

### 3.2 Zweite Variante:

Die unter 1. beschriebenen Probe-Muster wurden bei einem alternativen Ansatz mittels eines Geräts des Typs "V 6-G" (Fa. PINK) einer plasmagestützten chemischen Gasphasenabscheidung unterworfen (Vakuumpumpe vom Typ PFEIFFER Duo 10).

Der erste Behandlungsschritt war eine zweiminütige Reinigung der Oberfläche in einem Sauerstoff-Tetrafluormethan-Plasma (80:20; ca. 0.4 mbar). Die Beschichtung erfolgte in einem Hexafluorethanplasma bei einem Druck von ca. 0.4 mbar in fünf Schritten zu je 10 Minuten. Die Behandlungsschritte erfolgten jeweils bei einer Plasmaleistung von 150 W.

### Ergebnisse:

Die hierbei erhaltenen Ergebnisse sind in untenstehender Tabelle 4 gelistet.

**Tabelle 4: Oberflächenenergien der Probe-Muster nach Durchführung eines alternativen Niederdruck-Plasma-Verfahrens**

| | **Oberflächenenergien [mN/m]** | | |
|---|---|---|---|
| **Muster** | **polar** | **dispers** | **gesamt** |
| Abdeckung-PES | 0,5 | 8,5 | 9,0 |
| Weich-PVC | 0,5 | 8,3 | 8,8 |
| Blech-KTL | 0,2 | 9,9 | 10,1 |
| Abdeckung-PC | 38,9 | 5,4 | 44,3 |

Es konnte bei allen eingesetzten Probe-Mustern eine Reduzierung der Oberflächenenergie erzielt werden, wobei die Reduzierung der Oberflächenenergie im Falle von Abdeckung-PES, Weich-PVC und Blech-KTL fiel besonders signifikant ausfiel.

### 4. Nassverfahren

Alternativ zu den unter 3. beschriebenen chemischen Gasphasenabscheidungsverfahren wurden die unter 1. beschriebenen Proben-Muster in einem alternativen Ansatz mittels des unter der Bezeichnung "Dynasilan Sivo Clear EC" kommerziell erhältlichen Silanprodukts der Fa. Evonik beschichtet.

Hierfür wurden die Probenoberflächen jeweils zunächst gereinigt (im gegenständlichen Fall mit Isopropanol). Auf die trockenen Oberflächen wurde anschließend jeweils das flüssige Produkt aufgeschüttet und die Flüssigkeit bei einer Umgebungstemperatur von 15 bis 25 °C für 30 bis 60 Sekunden einpoliert. Ein zurückbleibender Flüssigkeitsfilm wurde mit einem sauberen Papiertuch abgewischt, bis keine Rückstände mehr sichtbar waren. Abhängig von dem Probenmuster stellte sich der hydrophobe Effekt nach 5 bis 15 Minuten ein. Die entsprechenden Versuchsergebnisse (ohne vorangegangene Aktivierung) sind in untenstehender Tabelle 5 aufgeführt.

**Tabelle 5: Oberflächenenergien der Probe-Muster nach Durchführung einer Silanbeschichtung**

| | **Oberflächenenergie [mN/m]** | | |
|---|---|---|---|
| **Muster** | **polar** | **dispers** | **gesamt** |
| Abdeckung-PES | 0,4 | 13,5 | 13,8 |
| Weich-PVC | 0,3 | 11,5 | 11,9 |
| Blech-KTL | 0,1 | 18,2 | 18,3 |
| Abdeckung-PC | 0,8 | 35,9 | 36,6 |

Die aufgetragene Schicht war über physikalische Wechselwirkungen an das Grundmaterial angebunden (Physisorption). Die Haftfestigkeit der Silanschicht konnte durch eine vorangehende Aktivierung der Oberfläche der Probe-Muster erhöht werden.

Die untenstehende Tabelle 6 gibt die Ergebnisse für die Oberflächenenergie mit vorangegangener Niederdruck-Plasmaaktivierung nach Reinigung mit Isopropanol wieder.

**Tabelle 6: Oberflächenenergien der Probe-Muster mit vorheriger Niederdruck-Plasmaaktivierung**

| | **Oberflächenenergie [mN/m]** | | |
|---|---|---|---|
| **Muster** | **polar** | **dispers** | **gesamt** |
| Abdeckung-PES | 0,1 | 18,8 | 18,9 |
| Weich-PVC | 0,2 | 15,8 | 16,0 |
| Blech-KTL | 1,8 | 17,6 | 19,4 |
| Abdeckung-PC | 0,0 | 35,2 | 35,2 |

Auch im Falle der Silanbeschichtung trat optisch keine Veränderung der Probe-Muster auf. Die Oberflächenenergien konnten vor allem bei den Proben Abdeckung-PES, Weich-PVC und Blech-KTL besonders signifikant reduziert werden.

### 5. Bewitterungsversuche

Die beschichteten Probe-Muster wurden, um die Langzeitbeständigkeit zu testen, einer künstlichen Bewitterung unterworfen. Aufeinanderfolgend wurden die Proben den folgenden beiden, in den untenstehenden Tabellen 7 und 8 wiedergegebenen Bewitterungszyklen ausgesetzt:

**Tabelle 7: Bewitterungszyklus 1**

| **Klimalagerung mit Sonnensimulation (1000 W/m²)** | | | | |
|---|---|---|---|---|
| **Zyklus** | **Temperatur [°C]** | **Feuchte [%]** | **Zeit [h]** | **Wiederholung** |
| "1" | +40 | 90 | 12 | 10x |
| | -10 | - | 6 | |
| | 23 | 90 | 2 | |
| | +40 | 90 | 10 | |
| | +10 | 90 | 12 | |
| | -20 | - | 6 | |

Temperaturänderungsgeschwindigkeit: 1 °C/Minute (ist in den angegebenen Zeiten inbegriffen). Die Bestrahlung erfolgte mit Metallhalogenidstrahler (Leistung 1000 W/m²) entsprechend ISO 4892. Mit diesem Bewitterungszyklus wurde die Belastung durch zyklische Eisbildung an der Oberfläche simuliert.

**Tabelle 8: Bewitterungszyklus 2**

| **Klimalagerung mit zusätzlicher Wasserbelastung** | | | | | |
|---|---|---|---|---|---|
| **Zyklus** | **Temperatur [°C]** | **Feuchte [%]** | **Zeit [h]** | **Bestrahlung** | **Wiederholung** |
| "2" | 5 | 90 | 3 | ja | 10x |
| | -5 | - | 3 | ja | |
| | 5 | 90 | 3 | nein | |
| | -5 | - | 3 | nein | |

Temperaturänderungsgeschwindigkeit: 1 °C/Minute (ist in den angegebenen Zeiten inbegriffen). Die Proben wurden in Wasser gelagert. Die Bestrahlung erfolgte mit Metallhalogenidstrahler (Strahler 1000 W/m²) entsprechend ISO 4892.

Der Bewitterungszyklus 2 stellte eine Extremsituation nach. Die Proben wurden in Wasser gelagert und mit einem Metallhalogenidstrahler bei voller Leistung bestrahlt. Diese Art der Bestrahlung findet in der Automobilindustrie zur Überprüfung der Beständigkeit von Lackbeschichtungen Anwendung.

### Ergebnisse:

Die Oberflächenenergien wurden nach Beendigung des ersten Bewitterungszyklus und nach Beendigung des zweiten Bewitterungszyklus mittels Randwinkelmessungen bestimmt. Die Ergebnisse sind in der Tabelle 9 wiedergegeben.

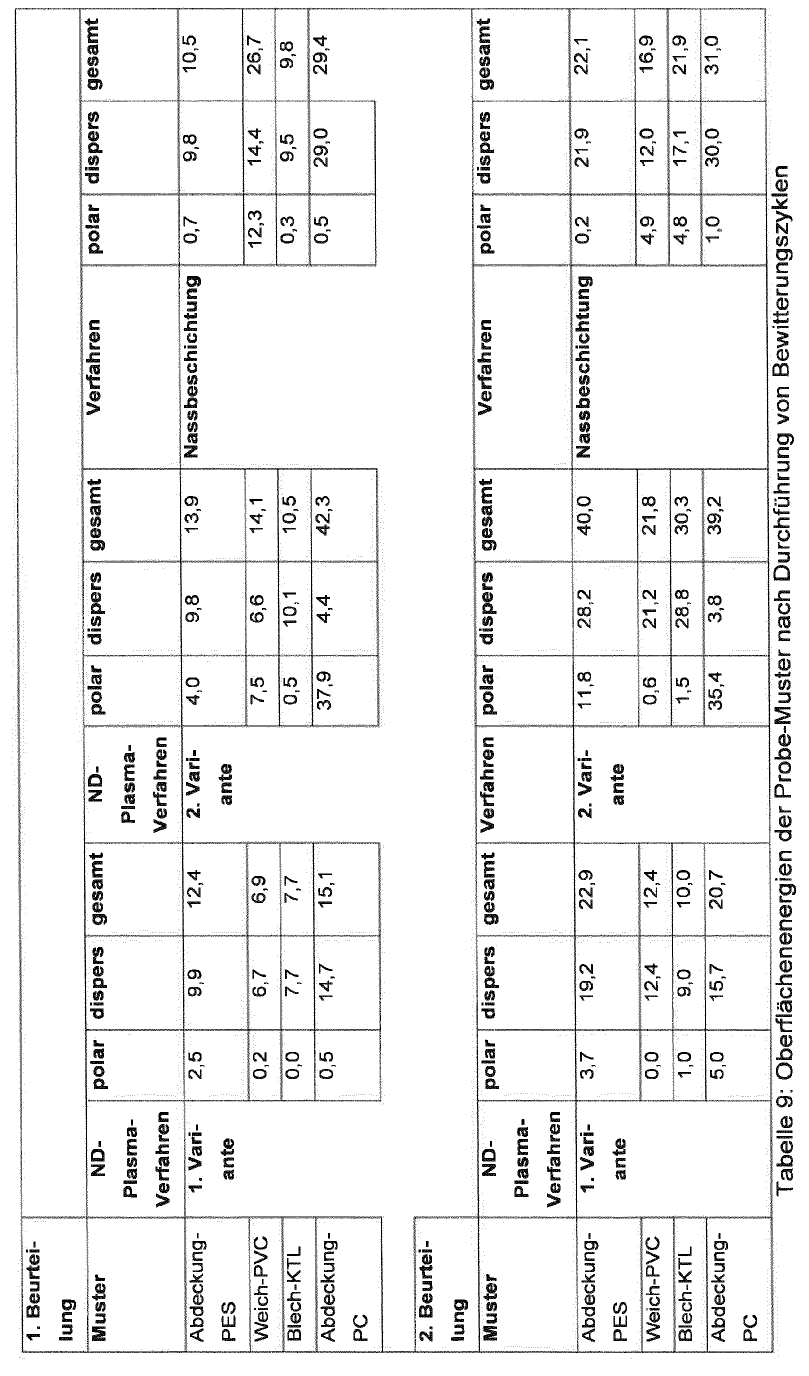

Zusammenfassend kann festgehalten werden, dass die Oberflächenenergien nach Durchlaufen des ersten Bewitterungszyklus im Wesentlichen nahe bei den Werten des Materials unmittelbar nach der Hydrophobierung lagen.

Der zweite Bewitterungszyklus bewirkte für sämtliche Beschichtungen zwar eine Erhöhung der Oberflächenenergien gegenüber der Initialhydrophobierung. Es kann jedoch festgehalten werden, dass trotz der simulierten Extrembelastung die Oberflächenenergien weit unterhalb der Ausgangswerte lagen.

### 6. Versuche zum Nachweis der Eisfreiheit

### 6.1 Verhalten von Wassertropfen an der Oberfläche

Die Wechselwirkungsstärke zwischen einer Oberfläche und Wasser kann am Verhalten eines Tropfens beobachtet werden. Die Oberflächenenergie eines unbeschichteten Blech-KTL-Musters lag bei etwa 30 mN/m. Die Wechselwirkung zwischen dem Wassertropfen und der Oberfläche des Musters war dementsprechend stark ausgeprägt, was sich in einem hohen Benetzungsgrad wiederspiegelte.

Dagegen betrug die Oberflächenenergie eines mittels chemischer Gasphasenabscheidung beschichteten Blech-KTL-Musters im gegenständlichen Fall ca. 4 mN/m. In diesem Fall wurde das Wasser von der Oberfläche des beschichteten Musters "abgestoßen". Es bildete sich ein Tropfen mit kleinem Radius.

### 6.2 Ablaufverhalten

Das unterschiedliche Benetzungsverhalten konnte auch im Rahmen von Ablaufversuchen von beschichteten und unbeschichteten Mustern verifiziert werden. Hierzu tauchte man beschichtete und unbeschichtete Muster in Wasser und beobachtete anschließend nach dem Herausziehen der Muster das Ablaufverhalten. Hierbei zeigte sich, dass bei den beschichteten Mustern, d.h. den Mustern mit niedrigerer Oberflächenenergie, das Wasser erkennbar schneller ablief als bei den unbeschichteten Mustern, d.h. bei den Mustern mit einer vergleichsweise höheren Oberflächenenergie.

### 6.3 Außenbewitterung

Beschichtete und unbeschichtete Muster wurden über Nacht an einem Außenbewitterungsstand gelagert. An sämtlichen Mustern war eine Eisbildung zu beobachten, wobei die Eisbildung bei den beschichteten Mustern deutlich geringer ausfiel. Die Eisschicht an den beschichteten Musterteilen konnte im Gegensatz zu den unbeschichteten Musterteilen zudem ohne großen Kraftaufwand mit einem Tuch abgewischt werden.

### 6.4 Haftabzugsversuche

An beschichteten und unbeschichteten Musterteilen wurden Haftabzugsprüfungen durchgeführt. Hierzu wurden Haftabzugsstempel in Wasser mittels Glaskugeln auf einen Abstand von 0.3 mm von der Oberfläche gehalten. Die Musterteile wurden anschließend bei unter 0 °C gelagert. Nach Bildung einer Eisschicht wurden die Stempel von den Oberflächen abgezogen. An den Mustern geringerer Oberflächenenergie konnte ein großflächigeres Ausbrechen des Eises beobachtet werden. Haftabzugswerte konnten nicht ermittelt werden, da ein Zuschneiden der Proben vor Abzug des Haftstempels die Beschichtungen angegriffen und somit die Werte verfälscht hätte.

## Patentansprüche

1. Verwendung eines hydrophobierten Kraftfahrzeugbauteils für ein Pistenpflegefahrzeug, umfassend einen Kraftfahrzeugbauteilkörper und wenigstens eine hydrophobe Silanschicht, die die Oberfläche des Kraftfahrzeugbauteilkörpers wenigstens teilweise beschichtet, wobei die wenigstens eine hydrophobe Silanschicht ein hydrophobes Silan enthält oder aus einem solchen besteht und es sich bei dem Silan um ein fluorhaltiges Silan handelt.

2. Verwendung eines hydrophobierten Kraftfahrzeugbauteils nach Anspruch 1, **dadurch gekennzeichnet, dass** das Silan ein Fluoralkyl- und/oder ein Fluoralkylalkoxysilan ist, vorzugsweise ausgewählt aus der Gruppe umfassend Tridecafluor-1,1,2,2-tetrahydrooctyltrichlor-silan, Tridecafluor-1,1,2,2-tetrahydrooctyltrimethoxysilan, Tridecafluor-1,1,2,2-tetrahydrooctyltriethoxysilan, Heptadecafluor-1,1,2,2-tetrahydrodecyltrichlorsilan, Heptadecafluor-1,1,2,2-tetrahydrodecyltriethoxysilan, Heptadecafluor-1,1,2,2-tetrahydrodecyltrimethoxysilan, C₁₀F₂₁C₂H₄SiCl₃, C₁₀F₂₁C₂H₄Si(OCH₃)₃, C₁₀F₂₁C₂H₄Si(OC₂H₅)₃, C₁₂F₂₅C₂H₄SiCl₃, C₁₂F₂₅C₂H₄Si(OCH₃)₃, C₁₂F₂₅C₂H₄Si(OC₂H₅)₃ und Mischungen davon.

3. Verwendung eines hydrophobierten Kraftfahrzeugbauteils nach Anspruch 1 und 2, **dadurch gekennzeichnet, dass** der Kraftfahrzeugbauteilkörper aus einem Material gebildet ist, welches ausgewählt ist aus der Gruppe umfassend Polyester (PES), insbesondere Polyethylenterephthalat (PET), Polyvinylchlorid (PVC), insbesondere Weich-PVC, Polycarbonate (PC), Polyurethane (PUR), Polymethylmethacrylat, Polypropylen, glasfaserverstärkte Kunststoffe, Polyesterharze, Epoxydharze, Metalle, mittels kathodischer Tauchlackierung beschichtete Bleche (KT-Bleche), epoxydharzbeschichtete Metalle bzw. Bleche und Kombinationen davon.

4. Verwendung eines hydrophobierten Kraftfahrzeugbauteils nach einem der vorhergehenden Ansprüche, **dadurch gekennzeichnet, dass** es sich bei dem Kraftfahrzeugbauteilkörper um ein Karosserieteil, insbesondere Verkleidungsteil, eines Pistenpflegefahrzeugs, vorzugsweise einer Pistenraupe handelt, vorzugsweise ausgewählt aus der Gruppe umfassend Frontmaske, Schneefräsenabdeckung, Überwurfschutz, Finisher und Fensterscheibe.

5. Pistenpflegefahrzeug, für das wenigstens ein Kraftfahrzeugbauteil gemäß eines der vorhergehenden Ansprüche verwendet wird.

## Claims

1. Use of a hydrophobized motor vehicle component for a piste grooming vehicle, comprising a motor vehicle component body and at least one hydrophobic silane layer which is an at least partial coating of the surface of the motor vehicle component body, wherein the at least one hydrophobic silane layer includes a hydrophobic silane or consists of such a silane and the silane is a fluoric silane.

2. Use of a hydrophobized motor vehicle component according to claim 1, **characterized in that** the silane is a fluoroalkyl and/or a fluoroalkylalkoxy silane, preferably selected from the group comprising (tridecafluoro-1,1,2,2-tetrahydrooctyl)trichlorosilane, (tridecafluoro-1,1,2,2-tetrahydrooctyl)trimethoxysilane, (tridecafluoro-1,1,2,2-tetrahydrooctyl)triethoxysilane, (heptadecafluoro-1,1,2,2-tetrahydrodecyl)trichlorosilane, (heptadecafluoro-1,1,2,2-tetrahydrodecyl)triethoxysilane, (heptadecafluoro-1,1,2,2-tetrahydrodecyl)trimethoxysilane, C₁₀F₂₁C₂H₄SiCl₃, C₁₀F₂₁C₂H₄Si(OCH₃)₃, C₁₀F₂₁C₂H₄Si(OC₂H₅)₃. C₁₂F₂₅C₂H₄SiCl₃, C₁₂F₂₅C₂H₄Si(OCH₃)₃, C₁₂F₂₅C₂H₄Si(OC₂H₅)₃, and mixtures thereof.

3. Use of a hydrophobized motor vehicle component according to claim 1 and 2, **characterized in that** the motor vehicle component body is made of a material which is selected from the group comprising polyesters (PES), in particular polyethylene terephthalate (PET), polyvinyl chloride (PVC), in particular plasticized PVC, polycarbonates (PC), polyurethanes (PUR), polymethyl methacrylate, polypropylene, glass fiber-reinforced plastics, polyester resins, epoxide resins, metals, metal sheets coated by cathodic dip coating (CDP sheets), epoxide resin-coated metals or sheets, and combinations thereof.

4. Use of a hydrophobized motor vehicle component according to any of the preceding claims, **characterized in that** the motor vehicle component body is a vehicle bodywork part, in particular a cladding part, of a piste grooming vehicle, preferably a tracked piste vehicle, preferably selected from the group comprising front fairing, snow cutter covering, protector unit, finisher, and window pane.

5. Piste grooming vehicle, for which at least one motor vehicle component according to any of the preceding claims is used.

## Revendications

1. Utilisation d'un composant de véhicule automobile hydrophobé pour un véhicule d'entretien des pistes, comprenant un corps de composant de véhicule automobile et au moins une couche de silane hydrophobe recouvrant la surface du corps de composant de véhicule automobile au moins partiellement, dans lequel l'au moins une couche de silane hydrophobe contient un silane hydrophobe ou consiste d'un tel silane et le silane est un silane contenant du fluor.

2. Utilisation d'un composant de véhicule automobile hydrophobé selon la revendication 1, **caractérisée en ce que** le silane est un fluoroalkylsilane et/ou un fluoroalkylalkoxysilane, de préférence sélectionné dans le groupe comprenant (tridécafluoro-1,1,2,2-tétrahydrooctyl)trichlorosilane, (tridécafluoro-1,1,2,2-tétrahydrooctyl)triméthoxysilane, (tridécafluoro-1,1,2,2-tétrahydrooctyl)triéthoxysilane, (heptadécafluoro-1,1,2,2-tétrahydrodécyl)trichlorosilane, (heptadécafluoro-1,1,2,2-tétrahydrodécyl)triéthoxysilane, (heptadécafluoro-1,1,2,2-tétrahydrodécyl)triméthoxysilane, C₁₀F₂₁C₂H₄SiCl₃, C₁₀F₂₁C₂H₄Si(OCH₃)₃, C₁₀F₂₁C₂H₄Si(OC₂H₅)₃, C₁₂F₂₅C₂H₄SiCl₃, C₁₂F₂₅C₂H₄Si(OCH₃)₃, C₁₂F₂₅C₂H₄Si(OC₂H₅)₃ et leurs mélanges.

3. Utilisation d'un composant de véhicule automobile hydrophobé selon la revendication 1 et 2, **caractérisée en ce que** le corps de composant de véhicule automobile est formé d'un matériau sélectionné dans le groupe comprenant polyesters (PES), en particulier poly(téréphtalate d'éthylène) (PET), chlorure de polyvinyle (PVC), en particulier PVC plastifié, polycarbonates (PC), polyuréthanes (PUR), poly(méthacrylate de méthyle), polypropylène, matières synthétiques renforcées de fibres de verre, résines de polyester, résines époxydiques, métaux, tôles recouvertes de revêtement par immersion cathodique, métaux ou tôles recouvertes de résines époxydiques et leurs combinaisons.

4. Utilisation d'un composant de véhicule automobile hydrophobé selon l'une quelconque des revendications précédentes, **caractérisée en ce que** le corps de composant de véhicule automobile est une partie de carrosserie, en particulier une partie de garniture, d'un véhicule d'entretien des pistes, de préférence une dameuse chenillée, de préférence sélectionnée dans le groupe comprenant un carénage frontal, dispositif de couverture de la souffleuse, dispositif protecteur, dispositif finisseur et carreau de fenêtre.

5. Véhicule d'entretien des pistes pour lequel au moins un composant de véhicule automobile selon l'une quelconque des revendications précédentes est utilisé.
